# EUROPÄISCHE PATENTSCHRIFT

(11) **EP 2 046 613 B1**
(45) Veröffentlichungstag und Bekanntmachung des Hinweises auf die Patenterteilung: **22.02.2012**
(21) Anmeldenummer: 07801153.3
(22) Anmeldetag: 12.07.2007
(51) Int. Cl.: B60S 9/08

(54) **HUBEINRICHTUNG**
LIFTING DEVICE
DISPOSITIF DE LEVAGE

(30) Priorität: 31.07.2006 DE 102006035919
(43) Veröffentlichungstag der Anmeldung: 15.04.2009
(73) Patentinhaber: Haacon Hebetechnik GmbH, 97896 Freudenberg/Main (DE)
(72) Erfinder: BIRKHOLZ, Holger, 97906 Faulbach (DE); MILTENBERGER, Robert, 63897 Miltenberg (DE); NATTERER, Ralf, 63853 Mömlingen (DE); TRUNK, Gerhard, 97903 Collenberg (DE)
(74) Vertreter: Tappe, Hartmut
(86) Internationale Anmeldenummer: PCT/DE2007/001247
(87) Internationale Veröffentlichungsnummer: WO 2008/014746

(56) Entgegenhaltungen:
- EP-A- 0 845 396
- EP-A- 1 350 701
- DE-U1- 20 305 175
- US-A1- 2003 168 648

## Beschreibung

Die vorliegende Erfindung betrifft eine Hubeinrichtung, insbesondere Sattelstütze oder dergleichen, nach dem Oberbegriff des Anspruchs 1.

Hubeinrichtungen der eingangs genannten Art werden in der Anwendung als Sattelstütze beispielsweise als höhenverstellbare Abstützeinrichtungen für sogenannte "Sattelauflieger" verwendet, wenn diese unabhängig von einem Zugfahrzeug abgestellt werden. Für den Betrieb der Hubeinrichtungen erweisen sich insbesondere eine einfache Bedienung als auch eine möglichst kompakte Ausführung der Hubeinrichtungen von Vorteil. Auf beides hat die Gestaltung des Hubgetriebes wesentlichen Einfluss, da das Hubgetriebe einerseits durch seine außerhalb am Schaftrohr vorgesehene Positionierung die äußeren Abmessungen der Hubeinrichtung wesentlich mitbestimmt und zum anderen aufgrund der Ausführung des Hubgetriebes als Schaltgetriebe einer einfachen und sicheren Durchführung des Schaltvorgangs zur Wahl des geeigneten Übersetzungsverhältnisses ein große Bedeutung zukommt.

Aus der US 2003/0168648 A1 ist ein Hubgetriebe einer Sattelstütze mit einer Antriebs- und einer Abtriebswellenanordnung mit jeweils einem durchmesserkleinen und einem durchmessergroßen Zahnrad bekannt. Ein durchmessergroßes Antriebszahnrad bildet eine Hohlwelle aus, die in einem Getriebegehäuse gelagert ist. Eine Schaltwelle ermöglicht ein Verschieben eines durchmesserkleinen Antriebszahnrads bzw. Ritzels und somit ein wahlweise Ineingriffbringen des Ritzels mit einem durchmessergroßen Abtriebszahnrad oder mit der Hohlwelle des durchmessergroßen Antriebszahnrads. So wird es möglich eine Änderung eines Übersetzungsverhältnisses mittels einer axialen Verschiebung des Ritzels bzw. einem Kupplungseingriff des Ritzels mit jeweils der Hohlwelle oder dem durchmessergroßen Abtriebszahnrad zu bewirken.

Der vorliegenden Erfindung liegt daher die Aufgabe zugrunde, eine Hubeinrichtung vorzuschlagen, deren Hubgetriebe einerseits eine möglichst kompakte, die äußeren Abmessungen der Hubeinrichtung nur wenig überragende Ausbildung aufweist und zum anderen eine einfache Bedienung, insbesondere hinsichtlich der Durchführung des Schaltvorgangs, ermöglicht.

Diese Aufgabe wird durch eine Hubeinrichtung mit den Merkmalen des Anspruchs 1 gelöst.

Bei der erfindungsgemäßen Hubeinrichtung weist die Antriebswellenanordnung eine in einem Getriebegehäuse gelagerte Hohlwelle und eine koaxial zur Hohlwelle angeordnete, axial verschiebbare und im Getriebegehäuse gelagerte Schaltwelle auf, wobei die Hohlwelle zur drehstarren Anordnung des durchmessergroßen Antriebszahnrads und die Schaltwelle zur drehstarren Anordnung des durchmesserkleinen Antriebszahnrads dient, und die Hohlwelle und die Schaltwelle mit Eingriffseinrichtungen versehen sind, die zur Änderung des Übersetzungsverhältnisses mittels axialer Verschiebung in Kupplungseingriff bringbar sind.

Die erfindungsgemäß gestaltete Hubeinrichtung ermöglicht aufgrund der Ausgestaltung der Antriebswellenanordnung als Kupplungsvorrichtung eine räumlich unmittelbar benachbarte Anordnung des durchmessergro-βen Zahnrads der Abtriebswelle und des durchmessergroßen Zahnrads der Antriebswelle mit geringstmöglichem axialem Abstand voneinander, da das auf der Hohlwelle angeordnete durchmessergroße Zahnrad der Antriebswellenanordnung ständig mitläuft und die Steuerung des Kraftflusses durch eine axiale Schaltbewegung der Schaltwelle gegenüber der Hohlwelle ausgeführt wird. Aus dieser axial dicht benachbarten Anordnung der durchmessergroßen Zahnräder der Antriebswellenanordnung und der Abtriebswellenanordnung ergibt sich ein entsprechend flacher Aufbau des Hubgetriebes.

Aufgrund der vom Antriebszahnrad unabhängigen Ausbildung von Eingriffseinrichtungen der Kupplungseinrichtung ist es möglich, die Auslegung der Eingriffseinrichtungen allein auf die Kupplungsfunktion und deren möglichst einfache Durchführung zu beschränken, ohne die Kupplung mit Rücksicht auf das Modul des Antriebszahnrads gestalten zu müssen.

Wenn das Antriebszahnrad eine Eingriffslänge aufweist, die größer bemessen ist als ein Eingriffsabstand zwischen den Eingriffseinrichtungen der Schaltwelle und den Eingriffseinrichtungen der Hohlwelle, ist sichergestellt, dass die Eingriffseinrichtungen in Eingriff miteinander gelangen, bevor das Antriebszahnrad außer Eingriff mit der Abtriebswellenanordnung kommt. Es kann also zu keiner Getriebestellung kommen, in der der Kraftfluss im Schaltgetriebe unterbrochen ist.

Wenn darüber hinaus die Hohlwelle der Antriebswellenanordnung und die Abtriebswellenanordnung jeweils im Bereich des durchmessergroßen Zahnrads einen übereinstimmenden Durchmesser aufweisen, ist es möglich, dass sowohl für die Hohlwelle der Antriebswellenanordnung als auch für die Abtriebswellenanordnung mit identischen Bohrungen versehene Zahnräder verwendet werden können, was sich entsprechend positiv auf die Herstellungskosten auswirkt.

Wenn darüber hinaus die durchmessergroßen Zahnräder einen übereinstimmenden Außendurchmesser und ein übereinstimmendes Modul aufweisen, sind die durchmessergroßen Zahnräder identisch ausführbar, so dass hiermit eine verringerte Anzahl unterschiedlicher Teile der Hubeinrichtung bzw. des Hubgetriebes verbunden ist, was zu einer weiteren Kostenersparnis führt.

Besonders effektiv werden die Einsparungsmöglichkeiten bei der Herstellung, wenn die durchmessergroßen Zahnräder aus übereinstimmend ausgebildeten Ringscheibenelementen zusammengesetzt sind, so dass die Anzahl unterschiedlicher Teile noch weiter reduziert werden kann.

Wenn die Eingriffseinrichtungen jeweils als eine Nockeneinrichtung mit zumindest einem Mitnehmernocken ausgebildet sind, die bei geeigneter Relativdrehung der Schaltwelle und der Hohlwelle in Eingriff miteinander gelangen, ist ein Schaltvorgang zur Überführung des Hubgetriebes von einem Lastgang, in dem das kleine Antriebszahnrad der Antriebswellenanordnung mit dem durchmessergroßen Zahnrad der Abtriebswellenanordnung kämmt, in einen Schnellgang, in dem das durchmessergroße Zahnrad der Antriebswellenanordnung mit dem durchmesserkleinen Zahnrad der Abtriebswellenanordnung kämmt, besonders einfach durchführbar, da entsprechend dem Winkelversatz der Mitnehmernocken die Wahrscheinlichkeit, dass der Schaltvorgang ohne eine gegenseitige Blockierung der Mitnahmenocken durchführbar ist, unabhängig von der Drehwinkelrelativstellung der Hohlwelle gegenüber der Schaltwelle sehr groß ist. Im Schnellgang ist die zu übertragende Last sehr gering, so dass zur Lastübertragung ein Eingriff zwischen wenigen Nocken ausreichend ist, um eine sichere Kraftübertragung zu ermöglichen. Zwar ist bei einem Umschalten von der Schnellgangstellung in die Lastgangstellung andererseits die Wahrscheinlichkeit hoch, dass die Zähne des durchmesserkleinen Antriebzahnrads (Ritzel) nicht im ersten Versuch in die entsprechenden Eingriffslücken zwischen den Zähnen des durchmessergroßen Abtriebszahnrads der Abtriebswellenanordnung greifen. Jedoch ist es möglich, die Schaltwelle lastfrei zwischen den Anschlägen der Mitnehmernocken zu drehen, so dass ein Zahneingriff ohne eine größere Anzahl von Fehlversuchen herstellbar ist. Aufgrund der vorgeschriebenen, selbsthemmenden Auslegung des Gewindes von Spindelmutter und Hubspindel ergibt sich die Lastfreiheit der Schaltwelle konstruktionsbedingt.

Als besonders einfach und somit kostengünstig realisierbar erweist es sich, wenn die Nockeneinrichtung der Schaltwelle aus einem die Schaltwelle radial durchdringenden Mitnehmerstift gebildet ist, dessen radial den Schaltwellendurchmesser überragende Enden Mitnehmernocken bilden.

Zur funktionskomplementären Ausbildung der Nockeneinrichtung der Hohlwelle erweist es sich als vorteilhaft, wenn diese aus zwei, um 180 Grad am Innenumfang der Hohlwelle versetzt angeordneten Mitnehmernocken bestehen.

Insbesondere bei einer Ausbildung der Hohlwelle als Formteil, beispielsweise Guss- oder Tiefziehteil, erweist sich es als vorteilhaft, wenn die Mitnahmenocken einstückig mit der Hohlwelle ausgebildet sind.

Zur Erhöhung der Betriebssicherheit der Hubeinrichtung ist es von Vorteil, wenn die Schaltwelle in Verlastungskonfiguration der Hubeinrichtung in Lastgangstellung zwei benachbarte Wandbereiche des Schaftrohrs und des Stützrohrs durchdringt, um so eine zusätzliche Ablaufsicherung zu bilden, die verhindert, dass das Stützrohr, beispielsweise bedingt durch Vibrationen während der Fahrt des Fahrzeuges, auf der Hubspindel abläuft.

Nachfolgend wird eine bevorzugte Ausführungsform der Hubeinrichtung anhand der Zeichnung näher erläutert.

Es zeigen:
- **Fig. 1**: eine Hubeinrichtung in Vorderansicht;
- **Fig. 2**: die in **Fig. 1** dargestellte Hubeinrichtung in Schnittdarstellung längs Schnittlinienverlauf II-II in **Fig. 1****;**
- **Fig. 3**: ein Schaftrohr der in **Fig. 1** dargestellten Hubeinrichtung im Querschnitt;
- **Fig. 4**: eine alternative Querschnittsausbildung des in **Fig. 3** dargestellten Schaftrohr-Querschnitts;
- **Fig. 5**: eine vergrößerte Darstellung des Hubgetriebes der Hubeinrichtung gemäß **Fig. 2****;**
- **Fig. 6**: eine Einzeldarstellung einer Hohlwelle einer in **Fig. 5** dargestellten Antriebswellenanordnung in Seitenansicht;
- **Fig. 7**: die in **Fig. 6** dargestellte Hohlwelle in perspektivischer Darstellung.

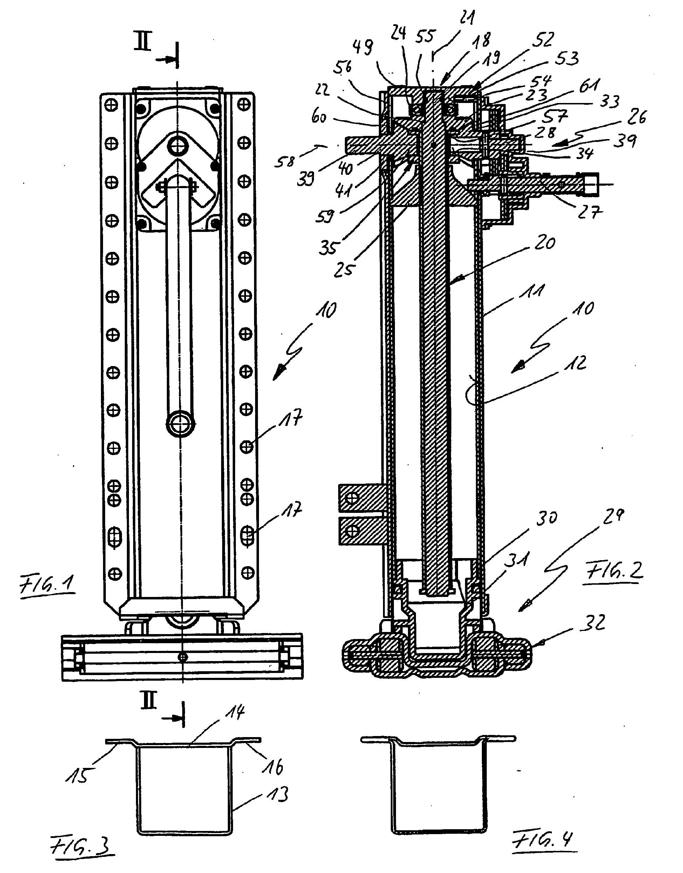

Aus einer Zusammenschau der **Fig. 1** und **2** ergibt sich der Aufbau einer Hubeinrichtung 10 mit einem Schaftrohr 11 und einem koaxial im Schaftrohr 11 angeordneten Stützrohr 12. Das Schaftrohr 11 ist gemäß dem in **Fig. 3** ausgeführten Ausführungsbeispiel, aus einem U-förmigen Schaftrohrprofil 13 und einer das Profil 13 zu einem Vierkantrohr ergänzenden Montageplatte 14 zusammengesetzt, die gleichzeitig die Rückwand des Schaftrohrs 11 bildet. Die Montageplatte 14 dient zum Anschluss an ein Fahrzeugchassis und weist an seitlich ausgebildeten Anschlussleisten 15, 16 eine Vielzahl von Montagebohrungen 17 auf, die eine Verbindung an unterschiedlich ausgebildeten Fahrzeugchassis bzw. in unterschiedlichen Montagehöhen an einem Fahrzeugschassis ermöglichen.

Wie sich insbesondere aus der in **Fig. 2** gezeigten Schnittdarstellung ergibt, erstreckt sich das im Schaftrohr 11 aufgenommene Stützrohr 12 im Wesentlichen über die gesamte Länge des Schaftrohrs 11. Wie aus **Fig. 2** ferner ersichtlich, weist das Schaftrohr 11 quasi als stirnseitigen Abschluss eine Druckplatte 18 auf, die zur Aufnahme eines oberen Hubspindelendes 19 einer Hubspindel 20 dient, die sich auf einer Längsachse 21 der Hubeinrichtung 10 bzw. des Stützrohrs 12 erstreckt. Am oberen Hubspindelende 19 befindet sich ferner ein auf einem Wellenbund 22 drehfest angeordnetes Hubspindelzahnrad 23, das zum Antrieb der Hubspindel 20 dient und sich zusammen mit der Hubspindel 20 über ein Axiallager 24 an der Druckplatte 18 abstützt.

Auf der Hubspindel 20 ist eine Spindelmutter 25 angeordnet, die an ihrem Umfang drehstarr mit dem Stützrohr 12 verbunden ist, so dass eine Rotation der Hubspindel 20 in Folge eines Antriebs des Hubspindelzahnrads 23 über den Gewindeeingriff der Hubspindel 20 mit der Spindelmutter 25 je nach Drehrichtung ein Ausfahren oder Einfahren des Stützrohrs 12 aus dem Schaftrohr 11 hinaus oder in dieses hinein bewirkt.

Zum Antrieb des Hubspindelzahnrads 23 dient ein unterhalb der Druckplatte 18 angeordnetes Hubgetriebe 26, das eine Antriebswellenanordnung 27 und eine Abtriebswellenanordnung 28, die auf das Hubspindelzahnrad 23 wirkt, umfasst.

Am unteren Ende des Stützrohres 12 befindet sich eine Fußeinrichtung 29, die eine mit einem unteren Stirnende 30 des Stützrohres 12 verbundene Fußaufnahme 31 sowie einen mit der Fußaufnahme 31 verbundenen Schwenkfuß 32 aufweist.

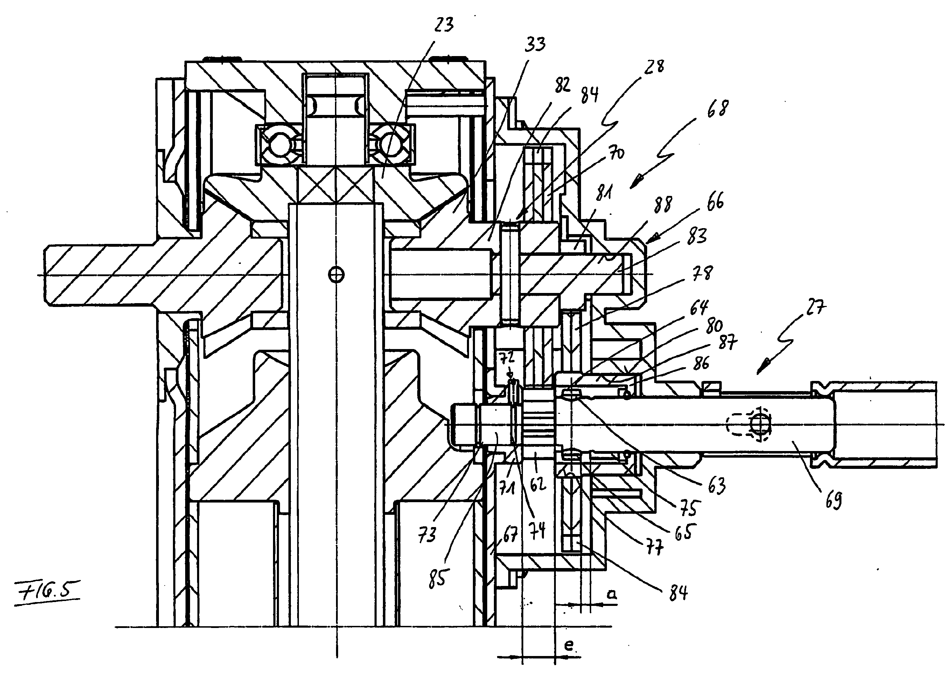

Das in **Fig. 5** vergrößert dargestellte Hubgetriebe 26 weist die Antriebswellenanordnung 27, umfassend eine Schaltwelle 85 und eine koaxial zur Schaltwelle 85 angeordnete Hohlwelle 86 auf. Auf der Schaltwelle 85 ist im vorliegenden Fall einstückig mit dieser ein durchmesserkleines Antriebszahnrad 62 ausgebildet. Mit axialem Abstand zum Antriebszahnrad 62 angeordnet befindet sich ein im vorliegenden Fall in die Schaltwelle 85 eingesetzter Mitnehmerstift 63, der durch zwei den Außendurchmesser der Schaltwelle 85 überragende Enden jeweils einen Mitnehmernocken 64 und 65 bildet. Die Schaltwelle 85 ist mit ihrem der Hubspindel 20 abgewandten Wellenende aus einem Gehäusedeckel 66 eines durch den Gehäusedeckel 66 und einen Schaftrohrwandbereich 67 gebildeten Getriebegehäuses 68 herausgeführt. Das aus dem Getriebegehäuse 68 herausgeführte Wellenende ist als Anschlussende 69 zum Anschluss eines Kurbeltriebs oder einer anderen geeigneten Antriebseinrichtung ausgebildet.

Die als Antriebswelle ausgeführte Schaltwelle 85 befindet sich in der in **Fig. 5** dargestellten Position in "Lastgangstellung", in der das Antriebszahnrad 62 mit einem durchmessergroßen Abtriebszahnrad 70 der Abtriebswellenanordnung 28 kämmt. In der "Lastgangstellung" ist das der Hubspindel 20 zugewandte Ende der Schaltwelle 85 durch einander überdeckende Rohrwandbereiche des Schaftrohrs 11 und des Stützrohrs 12 bis hinein in das Stützrohr 12 geführt. Zur Definition unterschiedlicher Schaltstellungen ist im Bereich eines in der Wandung des Schaftrohrs 11 angeordneten Wellenlagers 71 eine Rasteinrichtung 72 vorgesehen, die federgestützt in Rastnuten 73, 74 der Schaltwelle 85 einrastet.

In der dargestellten "Lastgangstellung" wird ausgehend vom durchmesserkleinen Antriebszahnrad 62 der Schaltwelle 85 über das durchmessergroße Abtriebszahnrad 70 der Abtriebswellenanordnung 28 das Hubspindelantriebszahnrad 33 und über dieses das Hubspindelzahnrad 23 zum Antrieb der Hubspindel 20 angetrieben. Zum Wechsel der Schaltstellung von der "Lastgangschaltstellung" in die "Schnellgangschaltstellung" wird die als Antriebswelle ausgeführte Schaltwelle 85 der Antriebswellenanordnung 27 aus dem Getriebegehäuse 68 bis zur Verrastung der Rasteinrichtung 72 in die Rastnut 73 herausgezogen. In dieser Schaltstellung befindet sich dann das der Hubspindel 20 zugewandte Wellenende der Schaltwelle 85 außerhalb des Stützrohrs 12.

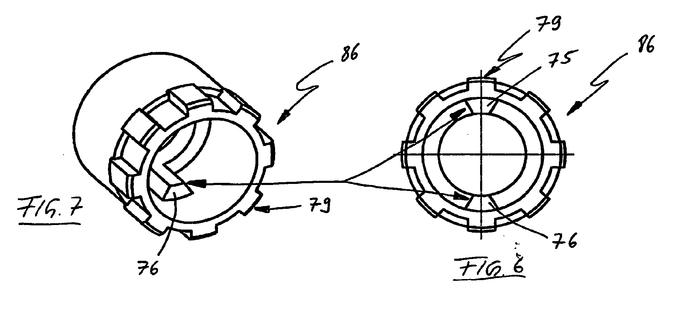

Weiterhin befinden sich in der "Schnellgangschaltstellung" die Mitnehmernocken 64, 65 der Schaltwelle 85 im Bereich von am Innenumfang der Hohlwelle 86 ausgebildeten Mitnehmernocken 75, 76, die in den **Fig. 6** **bzw. 7** deutlicher dargestellt sind. Im vorliegenden Fall sind die Mitnehmernocken 75, 76 der Hohlwelle 86 sowie die Mitnehmernocken 64, 65 der Schaltwelle 85 um 180 Grad radial versetzt. Auf einen Nabenbereich 77 der Hohlwelle 86 ist ein durchmessergroßes Antriebszahnrad 78 der Antriebswellenanordnung 27 drehstarr angeordnet. Hierzu weist die Hohlwelle 86, wie in den **Fig. 6 und 7** dargestellt, im vorliegenden Fall ein Keilwellenprofil 79 auf. Benachbart dem Nabenbereich 77 der Hohlwelle 86 weist die Hohlwelle 86 einen Lagerbund 80 auf, mit dem die Hohlwelle 86 drehbar im Gehäusedeckel 66 fliegend gelagert ist.

Das Antriebszahnrad 78 befindet sich in ständigem Eingriff mit einem durchmesserkleinen Abtriebszahnrad 81 der Abtriebswellenanordnung 28. Die Abtriebswellenanordnung 28 weist die Abtriebswelle 82 auf, die im vorliegenden Fall gleichzeitig zur Ausbildung des Hubspindelantriebszahnrads 33 dient, und einen mit der Abtriebswelle 82 drehstarr verbundenen Lagerzapfen 83, der gleichzeitig zur Ausbildung des durchmesserkleinen Abtriebszahnrads 81 dient. Zur Lagerung der Abtriebswellenanordnung 28 sind der Lagerzapfen 83 im Getriebedeckel 66 und die Abtriebswelle 82 in der Lagereinrichtung 35 gelagert.

In der "Schnellgangschaltstellung" befindet sich das kleine Antriebszahnrad 62 außer Eingriff mit dem durchmessergroßen Abtriebszahnrad 78, und die Mitnehmernocken 64, 65 der Schaltwelle 85 befinden sich im Eingriff mit den Mitnehmernocken 75, 76 der Hohlwelle 86, so dass das Antriebsdrehmoment von der Schaltwelle 85 über die Hohlwelle 86, das durchmessergroße Antriebszahnrad 78 und das durchmesserkleine Abtriebszahnrad 81 auf die Abtriebswellenanordnung 28 übertragen wird. In der "Schnellgangschaltstellung" läuft das durchmessergroße Abtriebszahnrad 70 lastfrei auf der Abtriebswelle 82 mit.

Wie aus **Fig. 5** ersichtlich, sind das durchmessergroße Antriebszahnrad 78 und das durchmessergroße Abtriebszahnrad 70 aus jeweils miteinander identischen Ringscheibenelementen 84 zusammengesetzt, die jeweils ein scheibenförmiges Zahnradsegment bilden. Dabei ist die unterschiedliche Anzahl der Ringscheibenelemente 84 entsprechend der unterschiedlichen Belastung der Zahnräder 78 und 70 im Lastgang bzw. Schnellgang gewählt.

Der Getriebegehäusedeckel 66 ist vorzugsweise aus einem Material mit guten Gleitlaufeigenschaften hergestellt, also beispielsweise aus einem geeigneten Guss- oder Sintermaterial oder vorzugsweise auch aus einem Kunststoffmaterial. Somit können die Hohlwelle 86 und der Lagerzapfen 83 der Abtriebswellenanordnung 28 unmittelbar ohne Verwendung separater Lagerbuchsen oder dergleichen in im Gehäusedeckel 66 ausgebildeten Lageraufnahmen 87 und 88 gelagert werden.

## Patentansprüche

1. Hubeinrichtung (10), insbesondere Sattelstütze oder dergleichen, mit einem Schaftrohr (11) und einem gegenüber dem Schaftrohr verfahrbaren Stützrohr (12), wobei am Schaftrohr eine Hubgetriebe (26) angeordnet ist, das eine Antriebswellenanordnung (27) zum Anschluss einer Antriebseinrichtung und eine Abtriebswellenanordnung (28) zum Antrieb einer im Stützrohr angeordneten Hubspindel (20) aufweist, wobei die Antriebswellenanordnung und die Abtriebswellenanordnung jeweils zumindest ein durchmessergroßes (70, 78) und ein durchmesserkleines Zahnrad (62, 81) aufweisen, die zur Ausbildung unterschiedlicher Übersetzungsverhältnisse in kraftschlüssigen Eingriff miteinander bringbar sind, wobei die Antriebswellenanordnung eine in einem Getriebegehäuse (68) gelagerte Hohlwelle (86) und eine koaxial zur Hohlwelle angeordnete, axial verschiebbare und im Getriebegehäuse gelagerte Schaltwelle (85) aufweist, wobei die Hohlwelle zur drehstarren Anordnung des durchmessergroßen Antriebszahnrads (78) und die Schaltwelle zur drehstarren Anordnung des durchmesserkleinen Antriebszahnrads (62) dient, und die Hohlwelle und die Schaltwelle mit Eingriffseinrichtungen versehen sind, die zur Änderung des Übersetzungsverhältnisses mittels axialer Verschiebung in Kupplungseingriff bringbar sind,
**dadurch gekennzeichnet,**
**dass** die Eingriffseinrichtungen unabhängig vom durchmesserkleinen Antriebszahnrad (62) ausgebildet sind.

2. Hubeinrichtung nach Anspruch 1,
**dadurch gekennzeichnet,**
**dass** das Antriebszahnrad (62) eine Eingriffslänge e aufweist, die größer bemessen ist als ein Eingriffsabstand a zwischen den Eingriffseinrichtungen der Schaltwelle (85) und den Eingriffseinrichtungen der Hohlwelle (86).

3. Hubeinrichtung nach Anspruch 1 oder 2,
**dadurch gekenntzeichnet,**
dass die Hohlwelle (86) der Antriebswellenanordnung (27) und die Abtriebswellenanordnung (28) jeweils im Bereich des durchmessergroßen Zahnrads (70, 78) einen übereinstimmenden Durchmesser aufweisen.

4. Hubeinrichtung nach Anspruch 3,
**dadurch gekennzeichnet,**
**dass** die durchmessergroßen Zahnräder (70, 78) einen übereinstimmenden Außendurchmesser und ein übereinstimmendes Modul aufweisen.

5. Hubeinrichtung nach Anspruch 4,
**dadurch gekennzeichnet,**
**dass** die durchmessergroßen Zahnräder (70, 78) aus übereinstimmend ausgebildeten Ringscheibenelementen (84) zusammengesetzt sind.

6. Hubeinrichtung nach einem der vorangehenden Ansprüche,
**dadurch gekennzeichnet,**
**dass** die Eingriffseinrichtungen jeweils als eine Nockeneinrichtung mit zumindest einem Mitnehmernocken (64, 65; 75; 76) ausgebildet sind, die bei geeigneter Relativdrehung der Schaltwelle (85) und der Hohlwelle (86) in Eingriff miteinander gelangen.

7. Hubeinrichtung nach Anspruch 6,
**dadurch gekennzeichnet,**
**dass** die Nockeneinrichtung der Schaltwelle (85) aus einem die Schaltwelle radial durchdringenden Mitnehmerstift (63) gebildet ist, dessen radial den Schaltwellendurchmesser überragende Enden Mitnehmernocken (64, 65) bilden.

8. Hubeinrichtung nach Anspruch 6,
**dadurch gekennzeichnet,**
**dass** die Nockeneinrichtung der Hohlwelle (86) aus zwei um 180 Grad am Innenumfang der Hohlwelle versetzt angeordneten Mitnehmernocken (75, 76) besteht.

9. Hubeinrichtung nach Anspruch 8,
**dadurch gekennzeichnet,**
**dass** die Mitnehmernocken (75, 76) einstückig mit der Hohlwelle (86) ausgebildet sind

10. Hubeinrichtung nach einem der vorangehenden Ansprüche,
**dadurch gekennzeichnet,**
**dass** die Schaltwelle (85) in Lastgangstellung und in verlasteter Konfiguration der Hubeinrichtung zwei benachbarte Wandbereiche des Schaftrohrs (11) und des Stützrohrs (12) durchdringt.

## Claims

1. A lifting device (10), in particular a semitrailer support or the like, comprising a shank tube (11) and a support tube (12) which is movable with respect to the shank tube, wherein on the shank tube a lifting gear mechanism (26) is arranged which comprises an input shaft arrangement (27) for connecting a drive device, and an output shaft arrangement (28) for driving a lifting spindle (20) which is arranged within the support tube, wherein the input shaft arrangement and the output shaft arrangement each comprise at least one large-diameter gearwheel (70, 80) and one small-diameter gearwheel (62, 81) which can be put in force-fitting engagement with one another to generate different transmission ratios, wherein the input shaft arrangement comprises a hollow shaft (86) supported in a gear housing (68) and an axially movable gearshift shaft (85) which is arranged coaxially with respect to the hollow shaft and which is supported in the gear housing, wherein the hollow shaft serves for the rotationally fixed arrangement of the large-diameter driving gearwheel (78), and the gearshift shaft serves for the rotationally fixed arrangement of the small-diameter driving gearwheel (62), and the hollow shaft and the gearshift shaft are provided with engagement devices which can be put in coupling engagement by means of axial movement in order to change the transmission ratio,
**characterized in that**
the engagement devices are formed so as to be independent of the small-diameter driving gearwheel (62).

2. The lifting device according to claim 1,
**characterized in that**
the driving gearwheel (62) has an engagement length e which is dimensioned greater then an engagement distance a between the engagement devices of the gearshift shaft (85) and the engagement devices of the hollow shaft (86).

3. The lifting device according to claim 1 or claim 2,
**characterized in that**
the hollow shaft (86) of the input shaft arrangement (27) and the output shaft arrangement (28) each have a congruent diameter in the region of the large-diameter gearwheel (70, 78).

4. The lifting diameter according to claim 3,
**characterized in that**
the large-diameter gearwheels (70, 78) have a congruent outer diameter and a congruent module.

5. The lifting device according to claim 4,
**characterized in that**
the large-diameter gearwheels (70, 78) consist of congruently formed annular disk elements (84).

6. The lifting device according to any one of the preceding claims,
**characterized in that**
each of the engagement devices are formed as a cam device with at least one driver cam (64, 65, 75, 76) which, during an appropriate relative rotation of the gearshift shaft (85) and the hollow shaft (86), get into engagement with one another.

7. The lifting device according to claim 6,
**characterized in that**
the cam device of the gearshift shaft (85) is formed from a driver pin (63) which radially penetrates the gearshift shaft, and the ends of which radially project beyond the gearshift shaft diameter and form driver cams (64, 65).

8. The lifting device according to claim 6,
**characterized in that**
the cam device of the hollow shaft (86) consists of two driver cams (75, 76) arranged offset by 180 degrees on the inner circumference of the hollow shaft.

9. The lifting device according to claim 8,
**characterized in that**
the driver cams (75, 76) are formed integral with the hollow shaft (86).

10. The lifting device according to any one of the preceding claims,
**characterized in that**
the gearshift shaft (85), in low gear position and in transport configuration of the lifting device, penetrates two adjacent wall regions of the shank tube (11) and the support tube (12).

## Revendications

1. Dispositif de levage (10), en particulier un support de remorque ou similaire, comprenant un tube de tige (11) et un tube de support (12) déplaçable par rapport au tube de tige, un mécanisme de levage (26) étant disposé au tube de tige et présentant un agencement d'arbre d'entraînement (27) pour le raccordement d'un dispositif d'entraînement et un agencement d'arbre de sortie (28) pour l'entraînement d'une broche de levage (20) étant disposée dans le tube de support, l'agencement d'arbre d'entraînement et l'agencement d'arbre de sortie présentant chacun au moins une roue dentée de grand diamètre (70, 78) et une roue dentée de petit diamètre (62, 81) pouvant être amenées en engrènement par adhérence l'une avec l'autre afin de générer différents rapports de transmission, l'agencement d'arbre d'entraînement présentant un arbre creux (86) monté dans un carter d'engrenage (68) et un arbre de changement de vitesses (85) disposé coaxialement par rapport à l'arbre creux, étant axialement déplaçable et étant monté dans le carter d'engrenage, l'arbre creux servant pour l'agencement immobile en rotation de la roue dentée d'entraînement de grand diamètre (78) et l'arbre de changement de vitesses servant pour l'agencement immobile en rotation de la roue dentée de petit diamètre (62), et l'arbre creux et l'arbre de changement de vitesses étant munis de dispositifs d'engrènement pouvant être amenés en engrènement de couplage au moyen d'un déplacement axial afin de varier le rapport de transmission,
**caractérisé en ce que**
les dispositifs d'engrènement sont formés de manière à être indépendants de la roue dentée d'entraînement de petit diamètre (62).

2. Dispositif de levage selon la revendication 1,
**caractérisé en ce que**
la roue dentée d'entraînement (62) présente une longueur d'engrènement e qui est dimensionnée plus grande qu'une distance d'engrènement a entre les dispositifs d'engrènement de l'arbre de changement de vitesses (85) et les dispositifs d'engrènement de l'arbre creux (86).

3. Dispositif de levage selon la revendication 1 ou 2,
**caractérisé en ce que**
l'arbre creux (86) de l'agencement d'arbre d'entraînement (27) et l'agencement d'arbre de sortie (28) dans la zone de la roue dentée de grand diamètre (70, 78) présentent chacun un diamètre congruent.

4. Dispositif de levage selon la revendication 3,
**caractérisé en ce que**
le roues dentées de grand diamètre (70, 78) présentent un diamètre extérieur congruent et un module congruent.

5. Dispositif de levage selon la revendication 4,
**caractérisé en ce que**
les roues dentées de grand diamètre (70, 78) sont composées d'éléments de disque annulaire (84) formés de manière congruente.

6. Dispositif de levage selon l'une quelconque des revendications précédentes,
**caractérisé en ce que**
chacun des dispositifs d'engrènement est formé en tant que dispositif à cames ayant au moins une came d'entraînement (64, 65; 75, 76) qui, lors d'une rotation relative appropriée de l'arbre de changement de vitesses (85) et de l'arbre creux (86), viennent en engrènement l'un avec l'autre.

7. Dispositif de levage selon la revendication 6,
**caractérisé en ce que**
le dispositif à cames de l'arbre de changement de vitesses (85) est formé d'une broche d'entraînement (63) qui pénètre radialement l'arbre de changement de vitesses et dont les extrémités faisant radialement saillie au delà du diamètre de l'arbre de changement de vitesses forment des cames d'entraînement (64, 65).

8. Dispositif de levage selon la revendication 6,
**caractérisé en ce que**
le dispositif à cames de l'arbre creux (86) est composé de deux cames d'entraînement (75, 76) qui sont disposées de façon décalée de 180 degrés le long de la circonférence intérieure de l'arbre creux.

9. Dispositif de levage selon la revendication 8,
**caractérisé en ce que**
les cames d'entraînement (75, 76) sont formées d'un seul tenant avec l'arbre creux (86).

10. Dispositif de levage selon l'une quelconque des revendications précédentes,
**caractérisé en ce que**
l'arbre de changement de vitesses (85), dans la position de petite vitesse et en configuration de transport du dispositif de levage, pénètre deux zones de paroi adjacentes du tube de tige (11) et du tube de support (12).
